# EUROPEAN PATENT APPLICATION

(11) **EP 1 696 537 A1**
(43) Date of publication of application: **30.08.2006**
(21) Application number: 05425100.4
(22) Date of filing: 25.02.2005
(51) Int. Cl.: H02K 7/10, H02K 7/08

(54) **Synchronous electric motor structure, particularly for washing machines with a rotary drum kinematically connected to the motor through a belt and pulley link**

(71) Applicant: Askoll Holding S.r.l., 36031 Dueville (IT)
(72) Inventor: Marioni, Elio, 36031 Dueville (Vicenza) (IT)
(74) Representative: Botti, Mario

(57) **Abstract**

The invention concerns a synchronous electric motor (3) particularly for washing-machines (1) and similar household appliances with rotary drum (2) kinematically connected to the motor (3) through a belt and pulley link (6), of the type comprising:
- a central stator (5) mounted fixed on an axis (7);
- an outer rotor (4) with permanent magnets (13) rotably cantilevered supported on the axis (7) of the motor (3) with interposition of at least one bearing (19).

Advantageously, the rotor (4) is substantially cylindrical cup-like shaped with bottom wall centrally shaped like a cylindrical funnel defining a hub (14) for receiving the bearing (19) and with a pulley (27) formed integrally with the hub in its substantial axial extension.

## Description

### Field of application

The present invention refers, in its most general aspect, to a synchronous electric motor, particularly for washing-machines with a rotary drum kinematically connected to the motor through a belt and pulley link.

Even more specifically, the invention concerns a synchronous electric motor of the aforementioned type and comprising:
- a central stator mounted fixed on an axis;
- a rotor with permanent magnets outside the stator and rotably cantilevered-like supported on said axis with interposition of at least one bearing.

### Prior art

As it is well known to the skilled in the art, household washing-machines are equipped with a washing tank wherein a rotary drum, which is normally cylindrical and which can be accessed through a door of the washing-machine to load the laundry to be washed, is actuated in rotation.

The drum is controlled in rotation by an electric motor. Normally, the electric motor is an asynchronous of the universal type with collector structured with an outer stator and a central rotor wound in cavity, which is firmly tied to a rotation shaft integral with a pulley. The drum is kinematically connected to the pulley through a second pulley and a transmission belt.

Although they are currently the most widely used on most washing-machines, these motors are not totally satisfactory for reasons linked to their operation noisiness, due to the commutation of the collector brushes, which is undesired due to the common installation of these machines in living spaces like the kitchen or the bathroom.

Moreover, with universal motors it is difficult to achieve high yields in the washing step and their consumption is relatively high in contrast to the current energy-saving trends.

Other drawbacks are due to the high rotation speeds that impose high transmission ratios.

In recent years washing-machines actuated by synchronous motors have been made available to the public.

A known, but rather expensive solution, provides the use of synchronous motors with permanent magnets mounted coaxially to the drum of the washing-machine, for example of the type known in the field as "Direct Drive" and described, for example, in US patent No. 6,341,507 to Miele.

Motors of this type have the advantage of not requiring a kinematic belt and pulley connection; however, the use of motors mounted coaxially to the shaft of the drum implies the solution of many space problems which transfer onto the drum structure the problem of how to keep the depth of the machine fixed against greater load volumes.

Moreover, driving problems arise due to the fact that the magnetic excitation flux, which is constant due to the permanent magnets, requires relatively higher current absorption by the stator windings to adequately regulate the changes in speed and direction of rotation of the motor. To limit the current on the single coil, so as to avoid the risk of demagnetisation, there is the further need of providing a higher fractioning of the stator poles.

Other solutions currently proposed by the known technique are even more expensive and provide the use of synchronous motors with extremely low thickness for washing-machines that occupy the highest price range in the market.

The technical problem underlying the present invention is that of providing a synchronous electric motor structure with an outer rotor, for washing-machines and similar household appliances, having such structural and functional characteristics as to achieve good strength and reliability, a high starting torque and a versatility of use on a wide range of machines that can be distinguished by their different washing load.

This motor must also be made with extremely low production costs and ensure an appreciable operating quietness at all operating speeds.

### Summary of the invention

The solution idea underlying the present invention is that of exploiting the quietness typical of synchronous motors with permanent magnets realising a motor having a cylindrical cup-like outer rotor with a pulley formed integrally with an outer extension of the rotor structure.

On the basis of such solution idea the technical problem is solved according to the present invention by a motor as previously indicated and defined in claim 1.

The characteristics and advantages of the motor according to the invention shall become clearer from the following description of an embodiment thereof, with reference to the attached drawings, given by way of indicative and non limiting example,

### Brief description of the drawings

In the drawings:
Figure 1 schematically represents a washing-machine incorporating a synchronous electric motor with an outer rotor according to the present invention.
Figure 2 illustrates a perspective view with detached parts of the electric motor according to the invention.

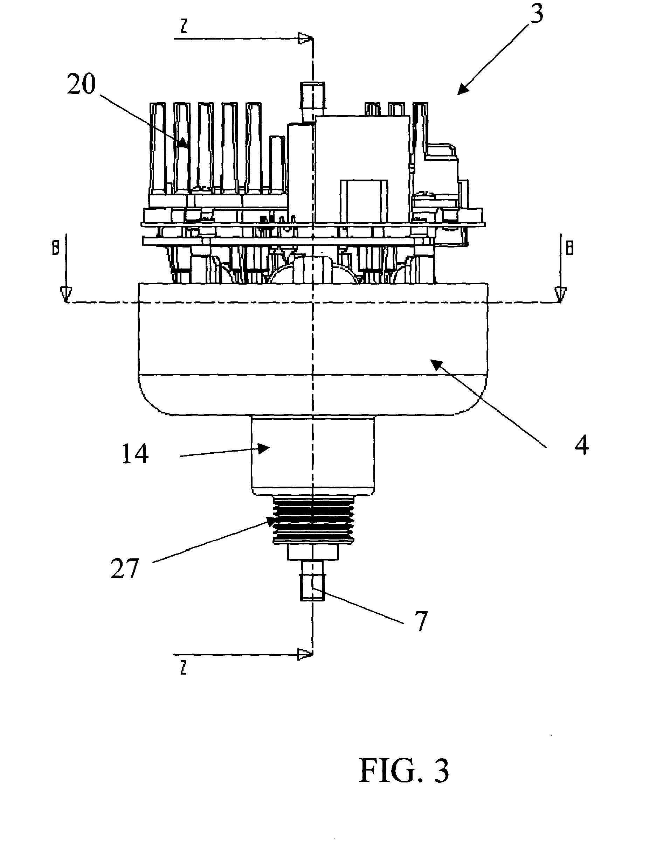

Figure 3 represents a schematic front view of a synchronous electric motor with outer rotor according to the present invention.
Figure 4 shows a cross section view, according to the section line Z-Z, of the motor of figure 3.
Figure 5 shows a longitudinal section view, according to the section line B-B, of the motor of figure 3.
Figure 6 shows a perspective view from bottom of a detail of the motor of figure 3.
Figure 7 shows a longitudinal partial section view of a detail of the motor of figure 6.
Figure 8 shows a longitudinal section view of a detail of the motor according to the invention in a second embodiment.

### Detailed description

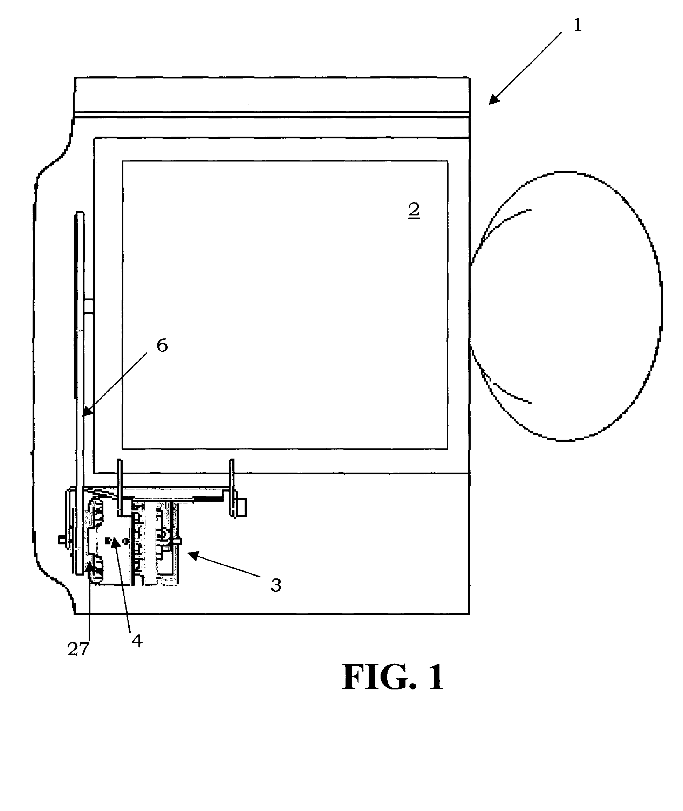

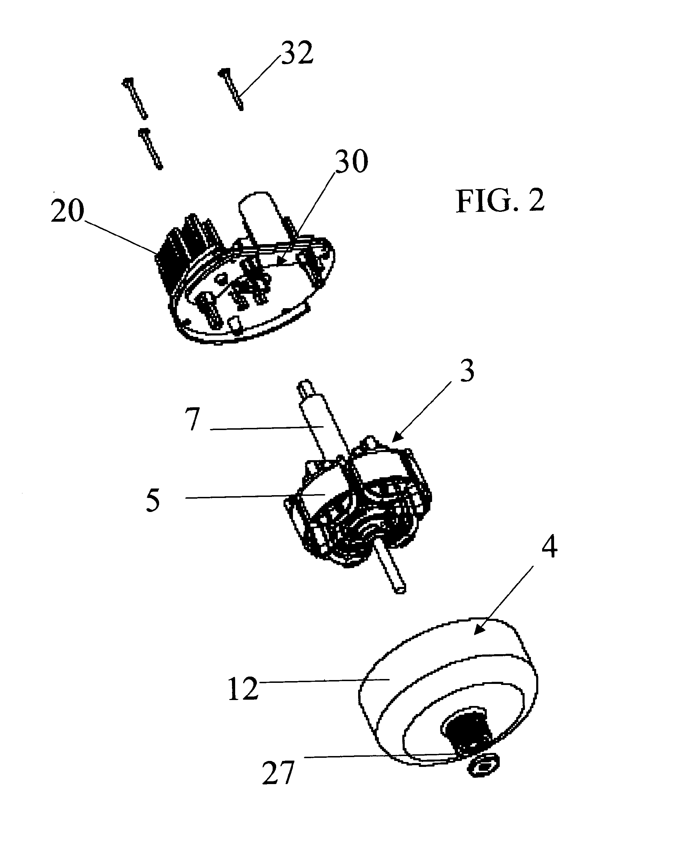

With reference to such figures, and in particular to the example of figures 1 and 2, 1 schematically indicates a washing-machine with rotary drum 2, for which a synchronous electric motor 3 according to the present invention is used.

This electric motor 3 is of the so-called outer rotor type, i.e. of the type wherein the rotor 4 is mounted outside the respective stator 5. The rotor is of the permanent magnets type.

The motor 3 is kinematically connected to the rotary drum 2 of the washing-machine 1 through a belt and pulley link 6 visible in figure 1. Overall, the structure of the inner stator 5 has a substantially cylindrical configuration, crossed by a substantially cylindrical or prismatic axial passage 15, of predetermined diameter.

The stator 5 comprises a plurality of known pole pieces 8 each of them being made of a corresponding plurality of identical plates 9, packed on top of each other, in mutual contact.

Each of said plates 9 has a substantially T-Iike profile, extending radially in said cylindrical configuration of the stator 5, and having an arc-of-circle-like outer end and an opposite end, or foot, shaped like an isosceles trapezium. The feet of the plates face the axial passage 15 with tilted sides extending radially thereto.

The axial passage 15 is crossed and engaged by the axis 7.

The synchronous electric motor 3 comprises an electronic device 30 electrically connected to the motor itself, which in the present embodiment is made integral with a heat dissipator element 20 associated with the device 30, which has a plate-like configuration with a large heat exchange surface.

Advantageously, the electronic device 30 comprises an electric control board 18 for the synchronous motor 3 suitably associated with the stator 5 in an axial extension thereof.

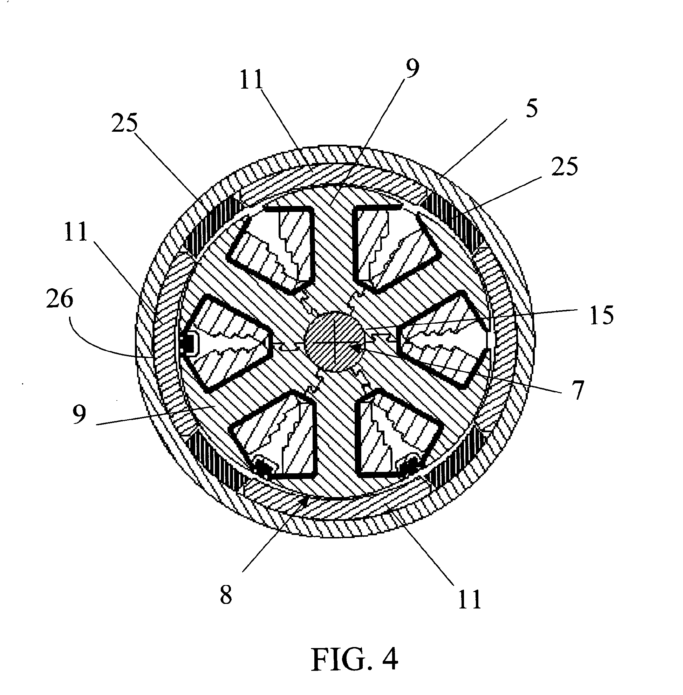

According to the embodiment illustrated in figures 2 and 4, the electronic board 18 is housed in a recess 21 formed on the side of the heat dissipator element 20 facing the stator 5.

Moreover, in a preferred embodiment, to obtain the electrical connection between the electronic board 18 and the stator 5, the synchronous electric motor 3 comprises first connector elements 22 of the board 18, projecting towards the stator 5, and second connector elements 24 of the stator 5, projecting towards the board 18.

In the case of the illustrated solution the first and second connectors 22 and 24, respectively, are connectors of the male/female quick clutch type, such as faston connectors.

Preferably, moreover, the electronic board 18 is arranged above the stator 5 and close to this latter to obtain an electrical connection having reduced wiring.

Advantageously, in accordance with the present invention, the outer rotor 4 with permanent magnets is fitted with predetermined clearance on the stator structure 5.

The rotor 4 comprises a casing 12, of substantially cylindrical shape, and a predetermined number of magnetic poles 11 associated with the inner wall 26 of the casing 12.

In the embodiment here described by way of indicative and non limiting example, purposes the rotor 4 comprises four magnetic poles 11. The stator 5, on the other hand, comprises a plurality of pole pieces 8 different in number with respect to the rotor magnetic poles 11, in particular they are six, as clearly shown in figure 4.

The magnetic poles 11 of the rotor 4 are plate-like annular sectors circumferentially spaced apart from one another by a section of predetermined size. However, there is nothing to provide sizes being different from each other of the above sections or differently spaced sections.

In a preferred embodiment, each of said sections is occupied by a corresponding insert 25 wedge inserted between the respective contiguous magnetic poles 11 and active thereon substantially like a keystone. Means, for example screws not represented in the drawings or glues, are provided for locking such inserts 25 in position against the inner wall 26 of the rotor 4.

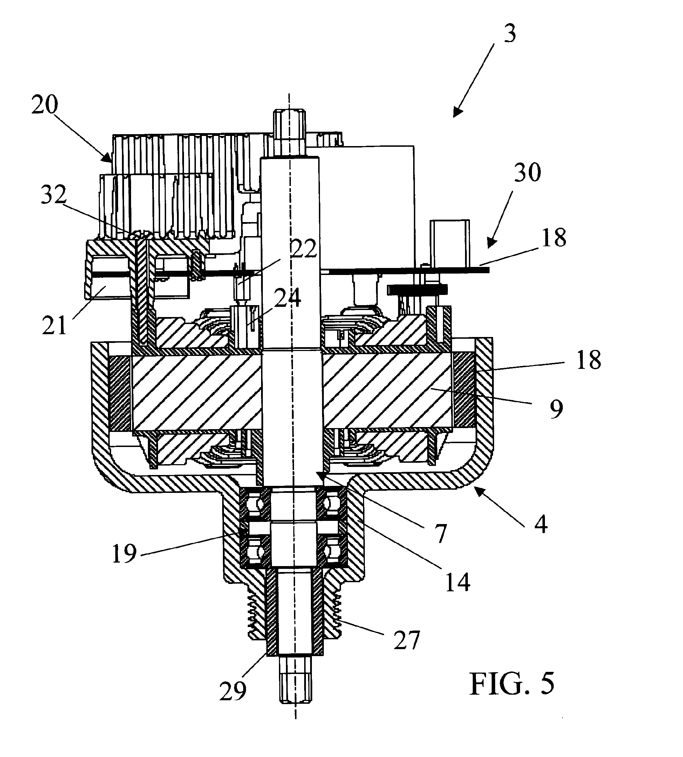

Advantageously, moreover, in accordance with a first embodiment of the present invention shown in figure 5, the rotor 4 is rotably cantilevered supported on the axis 7 with interposition of at least one bearing 19.

A pulley 27 is formed integrally with the rotor 4.

More in particular, the rotor 4 is substantially cylindrical cup-like shaped, obtained for example by pressing, with a bottom wall centrally shaped like a cylindrical funnel defining a hub 14 for receiving said bearing 19.

The hub 14 is obviously crossed by the axis 7 with interposition of the bearing 19.

The pulley 27 is integral with the hub 14 and it is situated at an end of the hub itself in a substantial axial extension thereof.

The pulley 27 is rotary about the axis 7 with interposition of a second sleeve-like bearing 29.

The bearing 29 is totally independent from the first bearing 19 even if it is situated close to this latter.

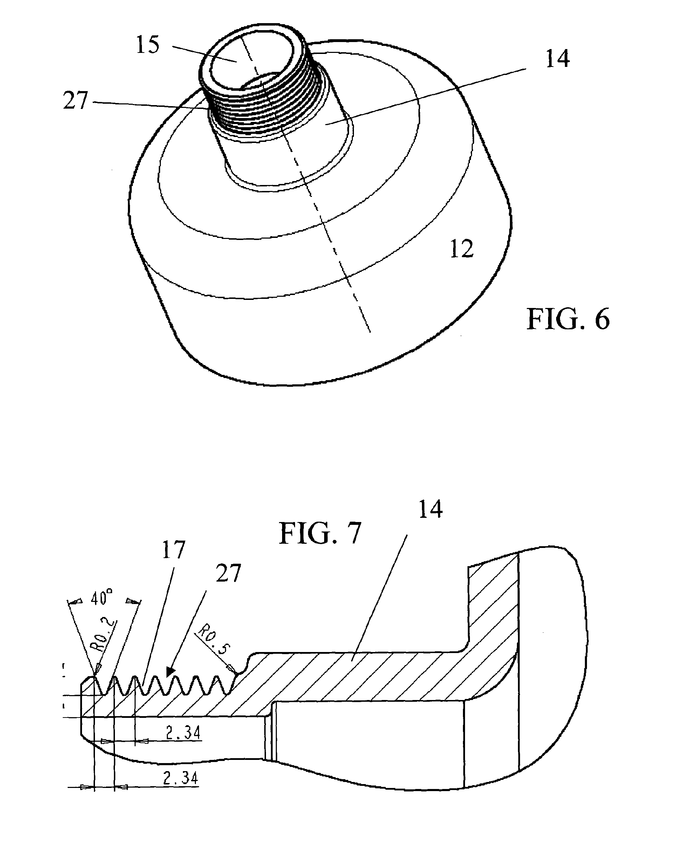

The pulley 27 is equipped with throats 17 on its entire length, visible in the section of figure 7. Preferably, the pitch between the throats is of 2,34 cm.

The pulley 27, integrally made with the hub 14 and with the rotor 4 in metallic material.

Moreover, the pulley 27 is in substantial extension of the hub 14 and does not have radially projecting portions with respect to the radial space of the hub being easy to make and low in cost.

The previously described rotor structure 4 has the clear advantage of providing a transmission kinematism between motor 3 and drum 2 that sees the load applied directly on the bearings 19 and 29 which, in proportion, can be sized smaller than those used in conventional motors, being able to better withstand the stress.

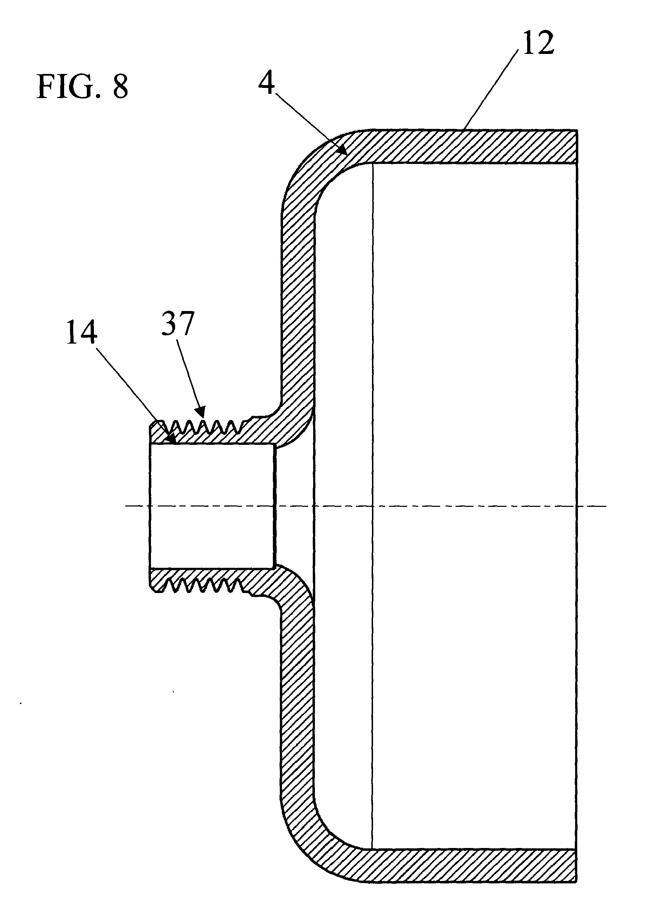

Now, with particular reference to the embodiment illustrated in figure 8, a further embodiment is described for which details and cooperating parts having the same structure and operation as the previous embodiment are indicated with the same reference numbers,

In this second embodiment, a pulley 37 is made on the outer surface of the hub 14 of the rotor 4.

In this case it is sufficient to equip the hub 14 only with the bearings 19.

This configuration allows a particularly compact and strong rotor structure to be obtained that is suitable to withstand particularly heavy workloads.

Indeed, it should be noted that the transmission stress is applied directly onto the bearings 19 with great dynamic balance.

Moreover, the pulley 37 projects less with respect to the bottom wall of the rotor 4 if compared with the previous embodiment and this special characteristic allows the motor 3 to be connected to the transmission kinematism 6 even in the presence of washing-machines having different locations of the support points of the motor 3.

An important advantage achieved by the rotor structure of the present invention is due to its particular strength due to the perfect balance between its components and to the solidity of the constraints between them.

Other advantages are given by the long useful operating life thanks to an overall structure that makes the motor according to the invention particularly powerful and capable of withstanding high transmission ratios with high starting torque and an average lower speed than the solutions proposed by the known technique.

## Claims

1. , Synchronous electric motor (3) particularly for washing-machines (1) and similar household appliances with a rotary drum (2) kinematically connected to the motor (3) through a belt and pulley link (6), of the type comprising:
- a central stator (5) mounted fixed on an axis (7);
- a rotor (4) with permanent magnets (13) outside the stator (5) and rotably cantilevered supported on said axis (7) with interposition of at least one bearing (19); **characterised in that**:
- said rotor (4) is substantially cylindrical cup-like shaped with bottom wall centrally shaped like a cylindrical funnel defining a hub (14) for receiving said at least one bearing (19);
- a pulley (27) being formed integrally with said hub in a substantial axial extension thereof.

2. Motor according to claim 1, **characterised in that** said pulley (27) is rotably mounted on said axis (7) with interposition of a relative bearing (29).

3. Motor according to claim 1, **characterised in that** said pulley (27) has at least one section equipped with a predetermined number of throats (17).

4. Motor according to claim 1, **characterised in that** said pulley (27) is equipped with throats (17) on its entire length.

5. Motor according to claim 1, **characterised in that** said pulley (27) is realised on the outer surface of said hub (14).

6. Motor according to claim 1, **characterised in that** said hub (14) is said pulley (27).

7. Motor according to claim 1, **characterised in that** said rotor (4), said hub (14) and said pulley (27) are formed integrally in metallic material.

8. Motor according to claim 1, **characterised in that** said pulley (27) has a radial space corresponding to the radial space of said hub (14).
